# EUROPÄISCHE PATENTANMELDUNG

(11) **EP 1 777 888 A1**
(43) Veröffentlichungstag der Anmeldung: **25.04.2007**
(21) Anmeldenummer: 05022726.3
(22) Anmeldetag: 18.10.2005
(51) Int. Cl.: H04L 12/56, H04Q 7/22

(54) **VoIP-Übertragung über HSDPA**

(71) Anmelder: SIEMENS AKTIENGESELLSCHAFT, 80333 München (DE)
(72) Erfinder: Klein, Axel, 81737 München (DE); Zuck, Josef-Peter, 85551 Kirchheim/Heimstetten (DE)

(57) **Zusammenfassung**

Die Erfindung betrifft ein Verfahren zum Übertragen von Informationen in einem Funkkommunikationssystem, bei welchem die Informationen von einem Sender zu Empfängern in Zeitschlitzen übertragen werden. In ersten Zeitschlitzen werden pro Zeitschlitz für jeweils einen Empfänger bestimmte Dateninformationen von dem Sender gesendet. In zweiten Zeitschlitzen werden pro Zeitschlitz mehrere Pakete (MS1 VoIP, MS2 VoIP) mit Sprachinformationen von dem Sender gesendet, wobei jedes Paket (MS1 VoIP, MS2 VoIP) für jeweils einen Empfänger bestimmt ist. Weiterhin betrifft die Erfindung einen Sender zur Durchführung des Verfahrens.

## Beschreibung

Die Erfindung betrifft ein Verfahren zum Übertragen von Informationen in Zeitschlitzen in einem Funkkommunikationssystem.

In Funkkommunikationssystemen werden Nachrichten, beispielsweise mit Sprachinformation oder Dateninformationen, mit Hilfe von elektromagnetischen Wellen über eine Funkschnittstelle zwischen Sender und Empfänger übertragen. Bei den Funkstationen kann es sich hierbei je nach konkreter Ausgestaltung des Funkkommunikationssystems um verschiedenartige Teilnehmerstationen oder netzseitige Funkeinrichtungen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Kodebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich.

Der Erfindung liegt die Aufgabe zugrunde, ein effizientes Verfahren zum Übertragen von Informationen in Zeitschlitzen aufzuzeigen. Weiterhin soll ein Sender zur Durchführung des Verfahrens vorgestellt werden.

Diese Aufgabe wird durch ein Verfahren mit den Merkmalen des Anspruchs 1 und durch eine Vorrichtung mit Merkmalen eines nebengeordneten Anspruchs gelöst. Vorteilhafte Ausgestaltungen und Weiterbildungen sind Gegenstand von Unteransprüchen.

Bei dem erfindungsgemäßen Verfahren zum Übertragen von Informationen in einem Funkkommunikationssystem werden in ersten Zeitschlitzen pro Zeitschlitz für jeweils einen Empfänger bestimmte Dateninformationen von dem Sender gesendet. Erfindungsgemäß werden in zweiten Zeitschlitzen pro Zeitschlitz mehrere Pakete mit Sprachinformationen von dem Sender gesendet, wobei jedes Paket für jeweils einen Empfänger bestimmt ist.

Bei dem Sender handelt es sich vorzugsweise um eine netzseitige Funkstation eines zellularen Funkkommunikationssystems, bei den Empfängern um an sich beliebig ausgestaltete Teilnehmerstationen. Es werden von dem Sender zwei verschiedene Informationstypen übertragen: Dateninformationen und Sprachinformationen. Sprachkommunikationen unterliegen dem Erfordernis der Echtzeitübertragung, d.h. Sprachinformationen sollen mit möglichst wenig Zeitverzögerung sowie mit möglichst geringer Verzögerungsvarianz übertragen werden. Im Gegensatz hierzu handelt es sich bei der Übertragung von Nicht-Sprachinformationen, d.h. bei der Übertragung von Dateninformationen, i.d.R. um Kommunikationen, welche deutlich geringerer Echtzeitanforderung unterliegen. Für diese ist oftmals eine stark schwankende Datenrate ausreichend.

Informationen werden in dem betrachteten System in Zeitschlitzen übertragen. In manchen Zeitschlitzen, als erste Zeitschlitze bezeichnet, werden Dateninformationen übertragen, welche ausschließlich für einen einzigen Empfänger bestimmt sind. Dem Empfänger steht in diesem Fall der jeweilige Zeitschlitz, oder gegebenenfalls der jeweilige Zeitschlitz in Kombination mit Funkressourcen eines anderen Mehrfachzugriffsverfahrens, exklusiv zur Verfügung. In anderen Zeitschlitzen, als zweite Zeitschlitze bezeichnet, werden zumindest unter anderem Sprachinformationen übertragen. Diese Sprachinformationen werden paketweise übertragen, wobei in jedem der zweiten Zeitschlitze mehr als ein Paket mit Sprachinformationen enthalten ist. Vorzugsweise ist jedes Paket mit Sprachinformationen der zweiten Zeitschlitze für einen anderen Empfänger bestimmt als die anderen Pakete mit Sprachinformationen des gleichen Zeitschlitzes.

Vorzugsweise sind die ersten und die zweiten Zeitschlitze gleich lang. Weiterhin ist es vorteilhaft, wenn die ersten und die zweiten Zeitschlitze sich lediglich in ihrer Verwendung zur Versendung von Daten- oder Sprachinformationen voneinander unterscheiden; die Zuordnung eines Zeitschlitzes zu den ersten oder den zweiten Zeitschlitzen kann flexibel abhängig von den aktuell zu versendenden Informationen erfolgen. Erste und zweite Zeitschlitze können sich abwechseln; es ist jedoch auch möglich, dass ein erster und ein zweiter Zeitschlitz die gleiche zeitliche Lage haben; in diesem Fall können die Informationen des ersten Zeitschlitzes von denen des zweiten Zeitschlitzes durch ein Vielfachzugriffsverfahren wie z.B. die Verwendung von Kodes unterscheidbar sein. Neben den ersten und den zweiten Zeitschlitzen können weitere Zeitschlitze vorhanden sein, d.h. neben der Verwendung eines Zeitschlitzes als erster oder zweiter Zeitschlitz ist es auch möglich, dass ein Zeitschlitz auf andere Weise eingesetzt wird.

In Weiterbildung der Erfindung werden zu Beginn der zweiten Zeitschlitze Zuordnungsinformationen betreffend die Zuordnung von innerhalb des jeweiligen Zeitschlitzes gesendeten Sprachinformationen zu Empfängern gesendet. Dies bedeutet, dass in jedem zweiten Zeitschlitz nicht nur mindestens zwei Pakete mit Sprachinformationen gesendet werden, sondern zumindest auch die Zuordnungsinformationen. Die Zuordnungsinformationen ermöglichen es einem Empfänger, welcher die Informationen des zweiten Zeitschlitzes empfängt, zu erkennen, welches Paket mit Sprachinformationen für ihn bestimmt ist. Die Zuordnungsinformationen können z.B. angeben, welche Bits aus einer Bitfolge das für den jeweiligen Empfänger bestimmte Paket darstellen.

Besonders vorteilhaft ist es, wenn für mindestens ein Paket mit Sprachinformationen eine Modulation und/oder Kodierung verwendet wird in Abhängigkeit von dem Funkkanal zwischen dem Sender und dem Empfänger, für welchen das Paket bestimmt ist. Bei einer gegebenen Anzahl von zu übertragenden Nutzbits hängt die Anzahl der tatsächlich zu übertragenden Bits davon ab, welche Modulation und/oder Kodierung auf die Nutzbits angewandt wird. Bei einem guten Funkkanal beispielsweise kann eine hochwertige Modulation in Kombination mit einer geringen Fehlerschutz- oder Fehlerkorrekturkodierung eingesetzt werden. Die Güte des Funkkanals kann z.B. bestimmt werden durch Messungen, welche der Empfänger an von dem Sender empfangenen Signalen durchführt und an den Sender rückmeldet, z.B. in Form eines CQI (Channel Quality Indicator). Vorzugsweise wird für alle Pakete mit Sprachinformationen eines zweiten Zeitschlitzes die gleiche Modulation und/oder Kodierung verwendet. In diesem Fall ist es günstig, wenn diese in Abhängigkeit von dem schlechtesten der Funkkanäle der Empfänger der Pakete gewählt werden.

In Ausgestaltung der Erfindung werden die Pakete mit Sprachinformationen derart auf die zweiten Zeitschlitze verteilt, dass die Sprachinformationen eines jeden Empfängers mit konstanter Datenrate gesendet werden. Eine solche konstante Datenrate kann realisiert werden, wenn z.B. jeder Empfänger von paketweisen Sprachinformationen in jedem n-ten Zeitschlitz ein Paket mit m Bits an Sprachinformationen empfängt. Hierbei ist es möglich, dass die Datenrate geringfügig schwankt, z.B. dadurch bedingt, dass die Position der Pakete eines Empfängers innerhalb der zweiten Zeitschlitze nicht immer die gleiche ist.

Vorteilhaft ist es, wenn in zumindest zwei der zweiten Zeitschlitze eine voneinander unterschiedliche Anzahl von Paketen mit Sprachinformationen gesendet werden. So kann beispielsweise ein zweiter Zeitschlitz lediglich zwei Pakete mit Sprachinformationen enthalten, während ein anderer mehrere, beispielsweise sechs Pakete mit Sprachinformationen enthält. Die Anzahl der Pakete mit Sprachinformationen, welche in einen Zeitschlitz passen, kann z.B. von der für die Pakete verwendeten Modulation und/oder Kodierung abhängen. Diese wiederum können in Abhängigkeit von den aktuellen Funkkanaleigenschaften gewählt werden.

Einer Weiterbildung der Erfindung gemäß werden vor der Versendung von Informationen in einem ersten Zeitschlitz Zuordnungsinformationen betreffend die Zuordnung des jeweiligen Zeitschlitzes zu jeweils einem Empfänger gesendet, und vor der Versendung von Informationen in einem zweiten Zeitschlitz Zuordnungsinformationen betreffend die Zuordnung des jeweiligen Zeitschlitzes zu jeweils mehreren Empfängern. Informationen werden in diesem Fall erst dann in einem ersten oder zweiten Zeitschlitz gesendet, wenn zuvor die den jeweiligen Zeitschlitz betreffende Ressourcenzuweisung erfolgt ist.

Es ist vorteilhaft, wenn von dem Sender in zumindest einem zweiten Zeitschlitz neben Paketen mit Sprachinformationen zumindest ein Paket mit Dateninformationen gesendet wird. Die zweiten Zeitschlitze können somit nicht nur zwischen mehreren Empfängern von Sprachinformationen aufteilt werden, sondern auch zwischen Paketen mit Sprachinformationen und Paketen mit Dateninformationen.

In Ausgestaltung der Erfindung wird für die Dateninformationen ein Übertragungswiederholungsverfahren eingesetzt, während für die Sprachinformationen ein solches nicht eingesetzt wird. Bei einem Übertragungswiederholungsverfahren bzw. ARQ-Verfahren versendet der Sender Informationen erneut an den Empfänger, wenn dieser die Informationen bei einer vorhergehenden Versendung nicht korrekt empfangen/dekodieren konnte. Ein Übertragungswiederholungsverfahren zwar für die Daten-, jedoch nicht für die Sprachinformationen einzusetzen, trägt den unterschiedlichen Verzögerungstoleranzen bei einer Sprach- im Gegensatz zu einer Datenübertragung Rechnung.

Vorteilhafterweise werden die Informationen in den ersten und den zweiten Zeitschlitzen unter Verwendung von Kodes gesendet. Neben einer Signalseparierung durch den Einsatz verschiedener Zeitschlitze findet somit eine zusätzliche Separierung durch eine Verwendung von Kodes statt. Auf einem Kode können sich erste und zweite Zeitschlitze abwechseln; es können auch Kodes ausschließlich für erste oder zweite Zeitschlitze verwendet werden.

Mit Vorzugs handelt es sich bei den Paketen mit Sprachinformationen um VoIP Pakete, und bei der Versendung der Dateninformationen um eine HSDPA Versendung.

Der erfindungsgemäße Sender weist Mittel auf zum Versenden von für jeweils einen Empfänger bestimmten Dateninformationen pro Zeitschlitz in ersten Zeitschlitzen, sowie Mittel zum Versenden mehrerer Pakete mit Sprachinformationen pro Zeitschlitz in zweiten Zeitschlitzen, wobei jedes Paket für jeweils einen Empfänger bestimmt ist.

Der erfindungsgemäße Sender eignet sich insbesondere zur Durchführung des erfindungsgemäßen Verfahrens, wobei dies auch auf die Ausgestaltungen und Weiterbildungen zutreffen kann. Hierzu kann er weitere geeignete Mittel umfassen.

Im folgenden wird die Erfindung anhand eines Ausführungsbeispiels näher erläutert. Dabei zeigen:
- Figur 1:: einen Ausschnitt aus einem Funkkommunikationssystem,
- Figur 2a:: eine Verwendung eines Transportblocks,
- Figur 2b:: eine erste erfindungsgemäße Verwendung eines Transportblocks,
- Figur 2c:: eine zweite erfindungsgemäße Verwendung eines Transportblocks.

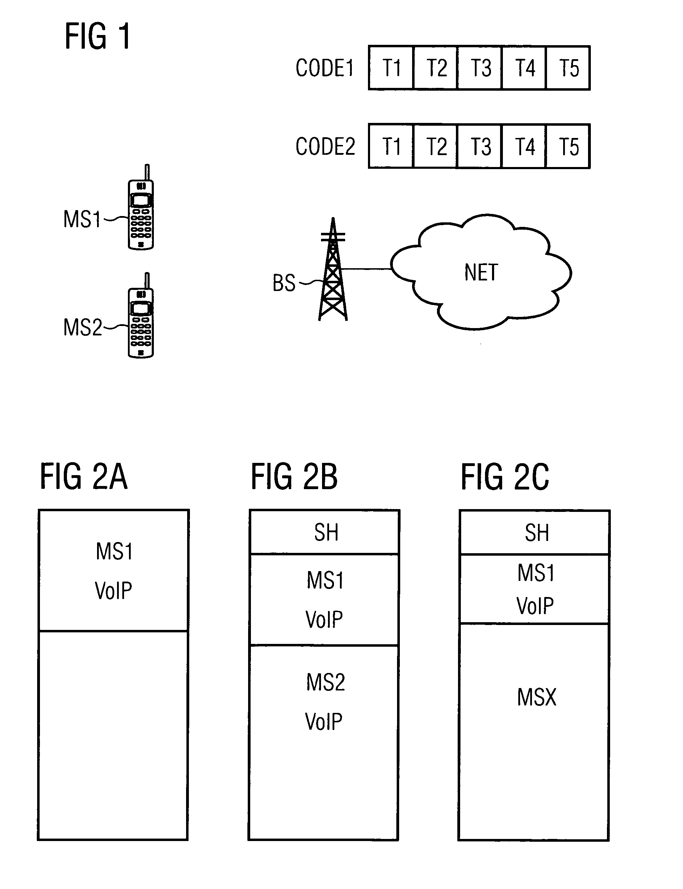

Der in Figur 1 dargestellte Ausschnitt aus einem Funkkommunikationssystem umfasst die Basisstation BS und die Teilnehmerstationen MS1 und MS2. Die Basisstation BS ist mit weiteren netzseitigen Einrichtungen NET des Funkkommunikationssystems verbunden. Bei dem betrachteten Funkkommunikationssystem handelt es sich um ein System nach dem Standard UMTS, welches den Dienst HSDPA (High Speed Downlink Packet Access) anbietet. HSDPA ermöglicht eine hochratige Datenübertragung in Abwärtsrichtung durch die Verwendung von Modulationsverfahren hoher Ordnung im Zusammenspiel mit geeigneten Übertragungswiederholungsverfahren (Hybrid ARQ Typ I und II, ARQ: Automatic Repeat Request). HSDPA wird erläutert z.B. in den 3GPP Standards TS25.211 bis TS25.214, sowie TS25.321.

Bei HSDPA handelt es sich um einen Paketdienst, welcher zur Übertragung von Daten eingesetzt wird. Soll für einen Teilnehmer zusätzlich oder alternativ zur über HSDPA erfolgenden Datenübertragung eine Sprachverbindung betrieben werden, so werden die Sprachinformationen auf einem DPDCH (Dedicated Physical Data Channel), der für die Übertragung von Nutzdaten bestimmten Komponente des DPCH (Dedicated Physical Channel), übertragen. Hierbei ist einer Teilnehmerstation konstant der gleiche Umfang von Funkressourcen zugewiesen. Bei HSDPA hingegen werden die Daten "geslottet" übertragen. Es existieren jeweils 2ms lange Zeitschlitze bzw. TTI's (TTI: Transmission Time Interval). In Figur 1 sind die fünf Zeitschlitze T1, T2, T3, T4 und T5 dargestellt. Die pro Zeitschlitz übertragenen Informationen werden im folgenden als Transportblock bezeichnet. Für die Versendung von Daten an Teilnehmerstationen im Rahmen des HSDPA-Dienstes sind 15 Kodes vorgesehen, wovon in Figur 1 die beiden Kodes CODE1 und CODE2 angegeben sind. Die Funkressourcen bestehen bei HSDPA somit aus einer Kombination von Zeitschlitz und Kode. Auf dem HS-SCCH (High Speed Shared Control Channel) wird den Teilnehmerstationen, welche Daten über HSDPA empfangen, dynamisch mitgeteilt, welcher Zeitschlitz und welcher Kode ihnen jeweils zugewiesen ist.

Bei HSDPA wird eine adaptive Modulation und Kodierung eingesetzt. Abhängig von den aktuellen Kanalbedingungen, welche von den Teilnehmerstationen gemessen werden, wird eine QPSK oder eine 16-QAM Modulation verwendet, und weiterhin wird durch eine unterschiedlich starke Fehlerkodierung der Quotient aus der Anzahl der Bits nach der fehlerkorrigierenden Kodierung und der Anzahl der zu kodierenden Bits variiert. Hierdurch können bei günstigen Kanalbedingungen mehr Nutzbits pro Transportblock übertragen werden.

Soll Sprache paketweise übertragen werden, so wird hierfür mit Vorzug VoIP (Voice over IP) eingesetzt. Bei VoIP werden die Sprachinformationen in Pakete aufgeteilt, wobei jedes Paket einen IP-Header zur Adressierung enthält. Bei einem 12.2 kbps AMR Dienst (AMR: Adaptive Multi-Rate) beispielsweise weist ein VoIP Paket eine Länge von ungefähr 280 Bit auf: die Sprachinformationen umfassen etwa 31 Bytes und der IP/UDP/RTP Header des Paketes umfasst etwa 4 Byte unter der Voraussetzung, dass eine Header Kompression verwendet wird, wobei die genaue Länge des Headers von dem verwendeten Kompressionsverfahren abhängt.

Werden VoIP Pakete über HSDPA übertragen, so kann an einen bestimmten Empfänger z.B. in jedem 10. Zeitschlitz ein VoIP Paket übertragen werden, so dass eine konstante Datenrate für die Sprachinformationen gewährleistet ist. Die Übertragung eines VoIP Paketes für die Teilnehmerstation MS1 in einem HSDPA-Transportblock ist in Figur 2a dargestellt. Der längliche Block stellt in den Figuren 2a bis 2c jeweils einen Transportblock dar, d.h. die Menge der innerhalb eines Zeitschlitzes auf einem Kode übertragenen Bits. Die Länge eines VoIP Paketes ist selbst bei Verwendung eines niedrigen Modulationsverfahrens und einer starken Kodierung, d.h. bei einer großen Zahl von pro VoIP Paket tatsächlich zu versendenden Bits, kürzer als die Länge des Transportblocks. Daher füllen die Bits des VoIP Paketes nur einen Teil des Transportblockes aus, der Rest des Transportblockes bleibt ungenutzt. Diese Verschwendung von Funkressourcen ist umso höher, je niedriger die Datenrate der Sprachinformationen ist, d.h. je weniger Nutzdaten ein VoIP Paket enthält. Sind 20 VoIP Nutzer in einer Funkzelle vorhanden, und wird jedem VoIP Nutzer ungefähr jeder 10. Zeitschlitz für seine VoIP Sprachinformationen zugewiesen, so resultiert dies in einer Belegung von zwei HSDPA-Kodes für den VoIP Dienst. Dies bedeutet, dass bei einer großen Anzahl von VoIP-Nutzern viele HSDPA-Kodes für Sprachinformationen belegt sind, so dass nur noch wenige Kodes für die Datenübertragung zur Verfügung stehen.

Figur 2b zeigt die Übertragung von VoIP Paketen gemäß der Erfindung. Der Transportblock der Figur 2b enthält zwei VoIP Pakete MS1 VoIP und MS2 VoIP, wobei ein erstes MS1 VoIP für die Teilnehmerstation MS1 und ein zweites MS2 VoIP für die Teilnehmerstation MS2 bestimmt ist. Die Konstellation der Figur 2b, wonach zwei VoIP Pakete für unterschiedliche Teilnehmerstationen in einem Transportblock übertragen werden, ist nur beispielhaft. Bei einem 12.2 kbps AMR-Dienst beispielsweise können bei günstigen Kanalbedingungen pro Kode bis zu 6 VoIP Pakete in einem Transportblock enthalten sein.

Zu Beginn des Transportblocks steht ein Header SH, welcher anzeigt, welcher Teil des Transportblocks für welche Teilnehmerstation bestimmt ist. Um das für sie bestimmte VoIP Paket detektieren zu können, beobachtet eine Teilnehmerstation somit wie bei HSDPA üblich den HS-SCCH, um zu erfahren, auf welchem Kode und in welchem Zeitschlitz ihr VoIP Paket übertragen wird. Da VoIP Pakete für mehrere Teilnehmerstationen in dem gleichen Transportblock übertragen werden, empfangen mehrere Teilnehmerstationen die gleichen Informationen des HS-SCCH. Zu Beginn des Transportblocks des durch die Informationen des HS-SCCH indizierten Zeitschlitzes und Kodes informiert dann der Header SH darüber, welche Bits des Transportblocks das VoIP Paket der jeweiligen Teilnehmerstation darstellen. Es erfolgt somit eine zweifache Zuweisung von Funkressourcen an die Teilnehmerstationen, welche VoIP Pakete in den HSDPA Transportblöcken empfangen.

Es werden VoIP Pakete für zwei oder mehr Teilnehmerstationen innerhalb eines HSDPA-Zeitschlitzes übertragen. Dies ist möglich durch die Verwendung eines eigenen Headers SH zu Beginn eines jeden VoIP Pakete für mehr als eine Teilnehmerstation enthaltenden Datenblockes. Hierdurch werden die Funkressourcen effizient genutzt, wodurch mehr Nutzer pro Funkzelle die HSDPA-Übertragungen nutzen können. Dies gilt umso mehr, als zusätzlich das Verfahren der adaptiven Modulation und Kodierung auch für die VoIP Pakete eingesetzt werden kann. Bei günstigen Kanalbedingungen können für die VoIP Pakete eine höhere Modulation und eine geringere Kodierung eingesetzt werden, so dass ein VoIP Paket lediglich eine kleine Anzahl von kodierten Bits enthält. Hierdurch kann pro Transportblock eine größere Anzahl von VoIP Paketen übertragen werden kann. Insgesamt werden somit weniger der für den HSDPA-Dienst zur Verfügung stehenden Kodes für VoIP Nutzer blockiert.

Da pro Transportblock eine einheitliche Modulation und Kodierung verwendet wird, sollten für jeden Transportblock mit VoIP Paketen jeweils VoIP Pakete von Teilnehmerstationen zusammengestellt werden, welche aktuell ähnliche Funkübertragungsbedingungen erfahren. Bei der Auswahl von Modulation und Kodierung sollte eine Orientierung an derjenigen Teilnehmerstation der sich den Transportblock für VoIP Pakete teilenden Teilnehmerstationen erfolgen, welche die schlechtesten Übertragungsbedingungen meldet. Die Übertragungsbedingungen werden wie bei HSDPA üblich anhand der von den Teilnehmerstationen gesendeten CQI-Werte (CQI: Channel Quality Indicator) festgestellt.

Neben dem Kriterium, dass sich innerhalb eines Transportblocks VoIP Pakete von Teilnehmerstationen mit ähnlichen CQI-Werten befinden sollten, kann bei der Zusammenstellung der Teilnehmerstationen, welche sich einen Transportblock für ihre VoIP Pakete teilen, berücksichtigt werden, dass möglichst wenige Füllbits (englisch: padding) am Ende des Transportblocks benötigt werden. D.h. die VoIP Pakete und der Header SH sollten den Transportblock möglichst vollständig ausfüllen. Wird ein Transportblock nicht vollständig mit VoIP Paketen aufgefüllt, so können die restlichen Bits für die Übertragung von Daten verwendet werden. Dies ist in Figur 2c dargestellt, bei welcher der Transportblock ein VoIP Paket für die Teilnehmerstation MS1 enthält, sowie Dateninformationen für eine Teilnehmerstation MSX.

Je mehr VoIP Pakete für unterschiedliche Teilnehmerstationen innerhalb eines Transportblockes übertragen werden, desto mehr Signalisierung ist nötig. Während für die Datenübertragung über HSDPA auf dem HS-SCCH in Bezug auf jede Kombination aus Zeitschlitz und Kode lediglich eine Teilnehmerstation informiert werden muss, dass ihr die jeweilige Funkressourcenkombination zugewiesen ist, müssen nunmehr mehrere Teilnehmerstationen auf dem HS-SCCH über die Zuweisung der gleichen Funkressourcenkombination informiert werden. Während bislang für den HS-SCCH lediglich ein Kode verwendet wird, ist es möglich, der gesteigerten Signalisierungslast dadurch Rechnung zu tragen, dass mehrere Kodes für den HS-SCCH zur Verfügung gestellt werden.

Das für die Übertragung von Daten über HSDPA verwendete HARQ-Verfahren eignet sich nicht für die Übertragung von Sprachinformationen, da die hierdurch hervorgerufene Verzögerungsvarianz für Sprachinformationen zu groß ist. Daher wird auf die Verwendung des für die Datenübertragungen eingesetzten HARQ-Verfahrens für die VoIP Pakete verzichtet. Für die Datenübertragung der Teilnehmerstation MSX der Figur 2c beispielsweise wird das HARQ-Verfahren eingesetzt, obwohl für die Sprachübertragung der Teilnehmerstation MS1 innerhalb des gleichen Transportblocks hierauf verzichtet wird. Um den hierdurch in Bezug auf die Sprachinformationsübertragung hervorgerufenen Qualitätsverlust auszugleichen, sollte die üblicherweise bei HSDPA verwendete BLER (Block Error Rate) von 10% für die erstmalige Übertragung von VoIP Paketen reduziert werden.

Die beschriebene Vorgehensweise ermöglicht es, die Prinzipien der Übertragung von Sprachinformationen, welches auf einer konstanten Bitrate basiert, und von adaptiver Modulation und Kodierung, welches auf einer funkkanalabhängigen Bitrate basiert, zu kombinieren. Denn je besser die Funkübertragungsbedingungen, desto mehr VoIP Pakete können in einem Transportblock enthalten sein. Bei günstigen Kanalbedingungen nicht für VoIP Pakete benötigte Transportblöcke können für Datenübertragungen eingesetzt werden.

Die beschriebene Versendung von VoIP Pakten kann auf einem oder mehreren Kodes erfolgen. Hierbei ist es möglich, dass ein Transportblock mit einem oder mehreren VoIP Paketen auf mehrere Kodes aufgeteilt wird, so dass z.B. ein erster Teil eines VoIP Paketes in einem Zeitschlitz eines ersten Kodes übertragen wird, und ein zweiter Teil des VoIP Paketes in dem gleichen Zeitschlitz eines zweiten Kodes übertragen wird. Die jeweilige Teilnehmerstation wertet in diesem Fall die Zeitschlitze der beiden Kodes aus und entnimmt diesen unter Verwendung des jeweiligen Headers SH die Teile ihres VoIP Paketes.

Während die Erfindung anhand der paketweisen Übertragung von Sprachinformationen in Form von VoIP Paketen erläutert wurde, können die Sprachinformationen auch in Form anderer Pakete übertragen werden. Diese Pakete müssen nicht den IP-Header der VoIP Pakete aufweisen, so dass sie kleiner als die VoIP Pakete sein können.

## Patentansprüche

1. Verfahren zum Übertragen von Informationen in einem Funkkommunikationssystem, bei welchem
die Informationen von einem Sender (BS) zu Empfängern (MS1, MS2) in Zeitschlitzen (T1, T2, T3, T4, T5) übertragen werden,
in ersten Zeitschlitzen pro Zeitschlitz für jeweils einen Empfänger (MS1, MS2) bestimmte Dateninformationen von dem Sender (BS) gesendet werden,
**dadurch gekennzeichnet,**
**dass** in zweiten Zeitschlitzen pro Zeitschlitz mehrere Pakete (MS1 VoIP, MS2 VoIP) mit Sprachinformationen von dem Sender (BS) gesendet werden, wobei jedes Paket (MS1 VoIP, MS2 VoIP) für jeweils einen Empfänger (MS1, MS2) bestimmt ist.

2. Verfahren nach Anspruch 1, bei dem
zu Beginn der zweiten Zeitschlitze Zuordnungsinformationen (SH) betreffend die Zuordnung von innerhalb des jeweiligen Zeitschlitzes gesendeten Sprachinformationen zu Empfängern (MS1, MS2) gesendet werden.

3. Verfahren nach Anspruch 1 oder 2, bei dem
für mindestens ein Paket (MS1 VoIP, MS2 VoIP) mit Sprachinformationen eine Modulation und/oder Kodierung verwendet wird in Abhängigkeit von dem Funkkanal zwischen dem Sender (BS) und dem Empfänger (MS1, MS2), für welchen das Paket (MS1 VoIP, MS2 VoIP) bestimmt ist.

4. Verfahren nach einem der Ansprüche 1 bis 3, bei dem
die Pakete (MS1 VoIP, MS2 VoIP) mit Sprachinformationen derart auf die zweiten Zeitschlitze verteilt werden, dass die Sprachinformationen eines jeden Empfängers (MS1, MS2) mit konstanter Datenrate gesendet werden.

5. Verfahren nach einem der Ansprüche 1 bis 4, bei dem
in zumindest zwei der zweiten Zeitschlitze eine voneinander unterschiedliche Anzahl von Paketen (MS1 VoIP, MS2 VoIP) mit Sprachinformationen gesendet werden.

6. Verfahren nach einem der Ansprüche 1 bis 5, bei dem
vor der Versendung von Informationen in einem ersten Zeitschlitz Zuordnungsinformationen betreffend die Zuordnung des jeweiligen Zeitschlitzes zu jeweils einem Empfänger (MS1, MS2) gesendet werden, und
vor der Versendung von Informationen in einem zweiten Zeitschlitz Zuordnungsinformationen betreffend die Zuordnung des jeweiligen Zeitschlitzes zu jeweils mehreren Empfängern (MS1, MS2) gesendet werden.

7. Verfahren nach einem der Ansprüche 1 bis 6, bei dem
von dem Sender (BS) in zumindest einem zweiten Zeitschlitz neben Paketen (MS1 VoIP, MS2 VoIP) mit Sprachinformationen zumindest ein Paket mit Dateninformationen gesendet wird.

8. Verfahren nach einem der Ansprüche 1 bis 7, bei dem
für die Dateninformationen ein Übertragungswiederholungsverfahren eingesetzt wird, und für die Sprachinformationen kein Übertragungswiederholungsverfahren eingesetzt wird.

9. Verfahren nach einem der Ansprüche 1 bis 8, bei dem
die Informationen in den ersten und den zweiten Zeitschlitzen unter Verwendung von Kodes (CODE 1, CODE 2) gesendet werden.

10. Verfahren nach einem der Ansprüche 1 bis 9, bei dem
es sich bei den Paketen (MS1 VoIP, MS2 VoIP) mit Sprachinformationen um VoIP Pakete (MS1 VoIP, MS2 VoIP) handelt.

11. Verfahren nach einem der Ansprüche 1 bis 10, bei dem
es sich bei der Versendung der Dateninformationen um eine HSDPA Versendung handelt.

12. Sender (BS) zum Versenden von Informationen in einem Funkkommunikationssystem, mit
Mitteln zum Versenden der Informationen in Zeitschlitzen (T1, T2, T3, T4, T5), und
Mitteln zum Versenden von für jeweils einen Empfänger (MS1, MS2) bestimmten Dateninformationen pro Zeitschlitz in ersten Zeitschlitzen,
**gekennzeichnet durch**
Mittel zum Versenden mehrerer Pakete (MS1 VoIP, MS2 VoIP) mit Sprachinformationen pro Zeitschlitz in zweiten Zeitschlitzen, wobei jedes Paket (MS1 VoIP, MS2 VoIP) für jeweils einen Empfänger (MS1, MS2) bestimmt ist.
